Europäisches Patentamt

(19) European Patent Office

Office européen des brevets

(11) Numéro de publication : **0 265 324 B1**

(12) # FASCICULE DE BREVET EUROPEEN

(45) Date de publication du fascicule du brevet :
03.04.91 Bulletin 91/14

(51) Int. Cl.⁵ : **G01N 3/04**

(21) Numéro de dépôt : **87402264.3**

(22) Date de dépôt : **09.10.87**

(54) **Dispositif d'ancrage mécanique pour le maintien d'une extrémité d'une pièce parallélépipédique, procédé de fabrication d'un tel dispositif et adaptateur de ce dispositif pour son montage sur une machine de traction.**

(30) Priorité : 10.10.86 FR 8614137

(43) Date de publication de la demande :
27.04.88 Bulletin 88/17

(45) Mention de la délivrance du brevet :
03.04.91 Bulletin 91/14

(84) Etats contractants désignés :
DE GB IT NL

(56) Documents cités :
JOURNAL OF PHYSICS D: APPLIED PHYSICS, vol. 4, no. 11, novembre 1971, pages 1661-1667, Letchworth, GB; C.J. NEDERVEEN et al.: "Clamping corrections for torsional stiffness of prismatic bars"

(56) Documents cités :
REVIEW OF SCIENTIFIC INSTRUMENTS, vol. 46, no. 11, novembre 1975, pages 1588,1589, the American Institute of Physics, New York, US; A. FELDMAN et al.: "Improved stressing apparatus for photoelasticity measurements" PATENT ABSTRACTS OF JAPAN, vol. 40, no. 62 (P-10)[544], 9 mai 1980, page 74 P 10; & JP-A-55 31 974

(73) Titulaire : ASSOCIATION POUR LA RECHERCHE ET LE DEVELOPPEMENT DES METHODES ET PROCESSUS INDUSTRIELS (ARMINES)
60, Boulevard Saint-Michel
F-75272 Paris Cédex 06 (FR)

(72) Inventeur : Gilibert, Yvon
11, rue Eugène Delacroix,La Neuvillette
F-51100 Reims (FR)

(74) Mandataire : Bruder, Michel
10 rue de la Pépinière
F-75008 Paris (FR)

## Description

La présente invention concerne un dispositif d'ancrage mécanique pour le maintien d'une extrémité d'une pièce parallélépipédique, notamment d'un corps d'épreuve pendant un essai par exemple de traction ou de torsion, un procédé de fabrication d'un tel dispositif et un adaptateur de ce dispositif pour son montage sur une machine de traction.

Pour la réalisation d'essais de traction ou de torsion sur des corps d'épreuve parallélépipédiques, monoblocs ou composites collés suivant des plans de joints de formes différentes, il est impérativement nécessaire que l'axe longitudinal du corps d'épreuve parallélépipédique soit confondu avec l'axe d'application de l'effort de traction exercé par la machine de traction.

On connaît déjà, ainsi qu'il est décrit dans l'article de la revue JOURNAL OF PHYSICS D : APPLIED PHYSICS, vol. 4, no 11, novembre 1971, pages 1661-1667, Letchworth, GB, un dispositif d'ancrage d'un corps d'épreuve pour un essai de traction ou de torsion qui comprend un socle dont une première face frontale est prolongée par un tenon destiné à assurer la liaison avec un appareil tel qu'une machine de traction. Ce socle est creusé d'une lumière parallélépipédique qui débouche dans une première face latérale du socle et dans la seconde face frontale du socle qui est opposée à la première face frontale. Cette lumière est usinée sur une partie de la longueur et de la largeur du socle si bien que la première face latérale de ce socle dans laquelle débouche la lumière, présente une forme en U. Le corps d'épreuve est immobilisé dans la lumière au moyen d'un couvercle qui comporte une plaque de base fixée, au moyen de vis, sur la première face latérale du socle, de manière à serrer et à immobiliser fermement le corps d'épreuve dans la lumière du socle.

On connaît également, par le document PATENT ABSTRACTS OF JAPAN, vol. 40, no. 62 (p-10) (544), 9 mai 1980, page 74 P 10 ; & JP-A-55-31 974 un adaptateur pour le montage, sur une machine d'essai mécanique, d'une éprouvette présentant des tenons filetés à ses deux extrémités opposés. Cet adaptateur comporte deux pièces présentant des surfaces sphériques s'emboîtant l'une dans l'autre, ce qui permet d'améliorer l'alignement lors de l'application de la force de traction.

La présente invention a pour but de fournir un dispositif d'ancrage mécanique de conception particulièrement simple, facile à fabriquer, assurant une tenue ferme de la pièce et permettant une coïncidence parfaite de l'axe longitudinal de la pièce et de celui du dispositif d'ancrage pendant toute la durée de l'essai lorsque l'effort croît jusqu'à la rupture du corps d'épreuve.

A cet effet ce dispositif d'ancrage mécanique pour le maintien d'une extrémité d'une pièce parallélépipédique, notamment d'un corps d'épreuve pendant un essai mécanique par exemple de traction ou de torsion, comprenant un socle dont une première face frontale est prolongée par un tenon fileté destiné à assurer la liaison avec un appareil tel qu'une machine de traction, et dont l'axe coïncide avec l'axe du socle et de la pièce, le socle étant creusé d'une lumière parallélépipédique qui débouche dans une première face latérale et dans la seconde face frontale du socle, et qui est usinée sur une partie de la longueur et de la largeur du socle si bien que la première face latérale de ce socle dans laquelle débouche la lumière, présente une forme en U, un couvercle fixé au socle, ce couvercle comportant une plaque de base fixée, au moyen de vis, sur la première face latérale du socle, est caractérisé en ce que le couvercle comprend un noyau parallélépipédique prolongeant la plaque de base et s'engageant étroitement dans la lumière parallélépipédique, sur une hauteur inférieure à la profondeur de cette lumière, de manière à délimiter, entre le fond de la lumière et la face interne en regard du noyau, un logement parallélépipédique d'axe longitudinal confondu avec celui du socle et du tenon fileté et de section droite supérieure à celle de la pièce, et une couche de colle et des entretoises rigides, d'une même épaisseur, sont interposées entre chaque face latérale de la pièce et la face en regard de la lumière ou du noyau délimitant le logement parallélépipédique, les côtés de la section droite du logement parallélépipédique ayant des longueurs respectivement supérieures à celles des côtés de la section droite de la pièce en regard de deux fois la valeur de l'épaisseur des entretoises et de la couche de colle.

Chaque tenon fileté peut être attenant directement au socle du dispositif d'ancrage ou bien par l'intermédiaire d'un cône de centrage. La prévision d'un tel cône intermédiaire permet d'améliorer la précision du centrage mais dans certains cas le centrage par le seul filetage du tenon est suffisant.

L'invention a également pour objet un procédé de fabrication d'un dispositif d'ancrage mécanique du type susmentionné caractérisé en ce qu'on part d'un seul et même barreau parallélépipédique de longueur double de celle du dispositif d'ancrage, on rectifie, à l'outil meule de précision, les quatre faces du barreau parallélépipédique, on usine le barreau, par décolletage et filetage, pour obtenir, aux deux extrémités opposées du barreau, deux tenons filetés coaxiaux, avec éventuellement des cônes de centrage coaxiaux intermédiaires, on réalise par fraisage, dans une face latérale du barreau, une lumière longitudinale de longueur double de celle de chaque lumière d'un dispositif d'ancrage recevant une partie extrême collée de la pièce, on fraise le couvercle de manière à dégager son noyau de hauteur inférieure à la profondeur de la lumière fraisée dans le barreau, on coupe en deux transversalement, dans leurs plans transversaux médians, le barreau parallélépipédique présentant la lumière longitudinale et le couvercle pour obtenir deux paires d'éléments constitutifs socle et couvercle destinées à constituer les deux dispositifs d'ancrage mécanique pour les deux parties extrêmes opposées de la pièce, et on colle chacune des parties extrêmes de celle-ci dans le logement délimité, dans la lumière, par le noyau du couvercle, avec interposition des entretoises entre les faces latérales de la pièce et les faces en regard du logement.

L'invention a aussi pour objet un adaptateur pour le montage, sur une machine de traction, d'un dispositif d'ancrage mécanique du type précité, caractérisé en ce qu'il comprend une douille présentant un alésage taraudé axial dans lequel est vissé le tenon fileté du dispositif d'ancrage mécanique, cet alésage taraudé débouchant dans une face frontale du manchon par un chambrage conique évasé vers l'extérieur et recevant un cône de centrage de même angle prévu sur le dispositif d'ancrage entre son tenon fileté et son socle, cette douille comportant, à son extrémité opposée au chambrage conique, une tête de plus grand diamètre appliquée contre une butée sphérique montée à l'intérieur d'un support en forme de cloche qui est relié, par l'intermédiaire d'une queue axiale amovible traversant le fond du support en forme de cloche, aux mors de la machine de traction. Cette queue peut prendre toutes les formes nécessaires au montage sur les différentes machines de traction du commerce et elle peut même comporter une lumière de clavetage.

Le dispositif d'ancrage suivant l'intervention peut être généralement utilisé pour solliciter les assemblages collés d'une manière optimale, sans clivage, sans flexion ou cisaillement pur. Ainsi, la durée de vie de la liaison collée est considérablement accrue.

On décrira ci-après, à titre d'exemples non limitatifs, diverses formes d'exécution de la présente invention, en référence au dessin annexé sur lequel :

La figure 1 est une vue en coupe axiale d'un dispositif d'ancrage mécanique suivant l'intervention assurant le maintien de la partie extrême d'une pièce parallélépipédique.

La figure 2 est une vue en coupe transversale faite suivant la ligne II-II de la figure 1.

La figure 3 est une vue en coupe axiale du socle du dispositif.

La figure 4 est une vue en plan du socle du dispositif, avec la partie extrême de la pièce engagée dans le socle.

La figure 5 est une vue en coupe transversale faite suivant la ligne V-V de la figure 3.

La figure 6 est une vue en plan du couvercle du dispositif.

La figure 7 est une vue en élévation du couvercle.

La figure 8 est une vue en coupe transversale du couvercle.

La figure 9 est une vue en coupe axiale d'un dispositif pourvu d'un couvercle à cran.

La figure 10 est une vue en coupe transversale faite suivant la ligne X-X de la figure 9.

La figure 11 est une vue en plan du socle du dispositif de la figure 9.

La figure 12 est une vue en plan du couvercle du dispositif de la figure 9.

La figure 13 est une vue en élévation du couvercle du dispositif de la figure 9.

La figure 14 est une vue de face du couvercle du dispositif de la figure 9.

La figure 15 est une vue en élévation d'un barreau parallélépipédique utilisé au départ pour la fabrication du dispositif d'ancrage mécanique.

La figure 16 est une vue de profil du barreau de la figure 15.

La figure 17 est une vue de profil du barreau monté pour une opération de rectification plane de sa force horizontale supérieure.

La figure 18 est une vue en élévation du barreau monté pour la rectification plane de sa face supérieure.

La figure 19 est une vue en élévation illustrant le montage d'un mandrin sur un tour.

La figure 20 est une vue de profil du barreau parallélépipédique mis en place pour l'opération de décolletage des tenons filetés.

La figure 21 est une vue en élévation d'une plaquette latérale utilisée pour le tournage du barreau.

La figure 22 est une vue en élévation du barreau obtenu après tournage et filetage des deux tenons coaxiaux aux extrémités.

La figure 23 est une vue en coupe transversale faite suivant la ligne XXIII-XXIII de la figure 22.

La figure 24 est une vue en élévation d'un barreau pourvu à ses deux extrémités de tenons filetés se raccordant à des cônes de centrage.

La figure 25 est une vue en coupe transversale, à plus grande échelle, du dispositif d'ancrage mécanique assurant le maintien d'une partie extrême d'une pièce.

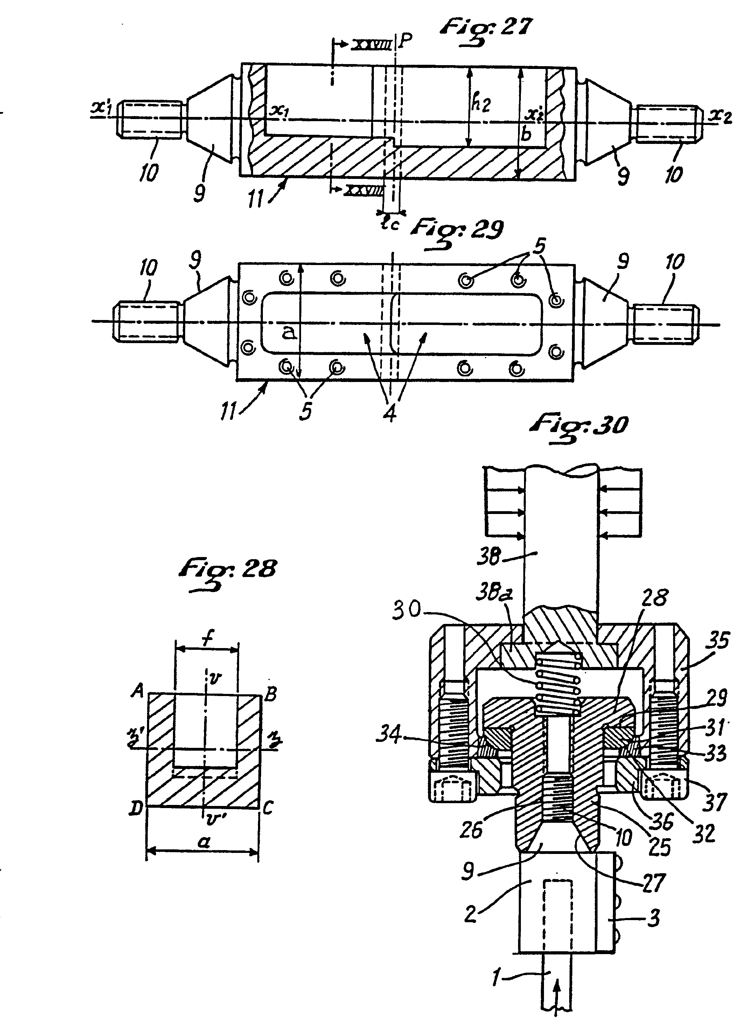

La figure 26 est une vue en coupe transversale d'un montage utilisé pour l'assemblage du dispositif.

La figure 27 est une vue en coupe axiale d'un barreau dont la lumière longitudinale est creusée avec deux profondeurs différentes.

La figure 28 est une vue en coupe transversale faite suivant la ligne XXVIII-XXVIII de la figure 27.

La figure 29 est une vue en plan du barreau de la figure 27.

La figure 30 est une vue en coupe axiale d'un adaptateur utilisable pour le montage du dispositif d'ancrage mécanique sur une machine de traction.

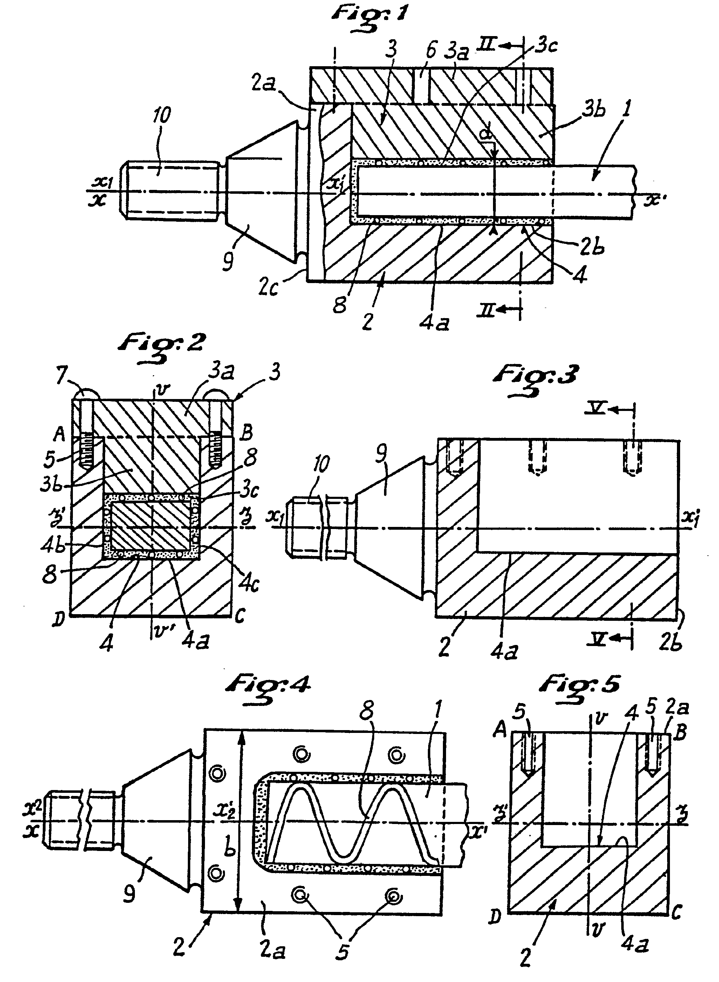

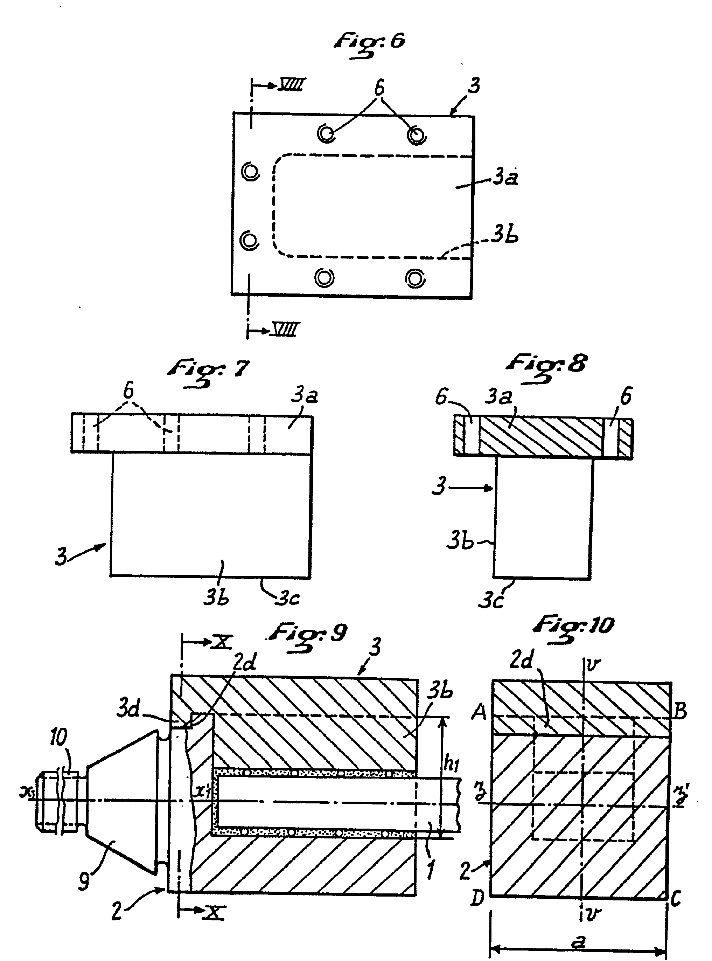

Le dispositif d'ancrage mécanique suivant l'invention qui est représenté sur les figures 1 et 2, est destiné à maintenir fermement et avec précision l'extrémité d'une pièce parallélépipédique 1 telle qu'un corps d'épreuve pendant un essai mécanique de traction longitudinale ou de torsion par exemple. Ce corps d'épreuve 1 est constitué par une barre, plaque etc.. d'une seule pièce ou encore une pièce composité formée d'éléments collés entre eux, ce corps d'épreuve 1 ayant une section droite rectangulaire. Il peut être constitué de matériaux très différents tels que bois, matière plastique, béton, composités, mousses, etc..

Le dispositif d'ancrage comporte essentiellement deux pièces principales fixées l'une à l'autre, à savoir un socle 2 et un couvercle 3.

Le socle 2 est constitué par un bloc parallélépipédique dans lequel est creusée une lumière 4, également de forme parallélépipédique, dont le fond 4a et les deux faces latérales verticales 4b, 4c sont parallèles aux faces latérales correspondantes au socle 2. Cette lumière 4 débouche dans la face horizontale supérieure 2a du socle 2, et dans sa face frontale droite 2b, mais elle ne s'étend pas sur toute la longueur ni sur toute la largeur du socle 2 si bien que la face supérieure horizontale 2a du socle 2 présente, vu en plan comme il apparaît sur la figure 4, une forme en U. Dans cette face horizontale supérieure 2a sont forés six trous taraudés 5, à savoir deux paires de trous forés dans les deux branches longitudinales du U que forme la surface supérieure 2a et deux autres trous dans l'âme ou partie transversale de la surface supérieure 2a. Les six trous 5 sont ainsi répartis en deux groupes de trois symétriques deux à deux par rapport à un plan vertical passant par l'axe longitudinal xx' du socle 2.

Le couvercle 3 comporte une plaque de base horizontale supérieure rectangulaire 3a qui recouvre la face horizontale supérieure 2a du socle 2, et a les mêmes dimensions que celle-ci. Cette plaque de base 3a est percée de six trous 6 répartis de la même façon que les trous taraudés 5 du socle 2 et à travers lesquels passent des vis 7 de serrage du couvercle 3 sur le socle 2, ces vis s'engagent dans les trous taraudés 5 du socle 2. La plaque de base 3a du couvercle 3 est prolongée vers le bas par un noyau parallélépipédique 3b qui est engagé en glissant juste ou sans jeu dans la lumière 4. Autrement dit ce noyau 3a a la même largeur et la même longueur que la lumière 4, sa hauteur étant inférieure à la profondeur de la lumière 4.

La partie extrême du corps d'épreuve parallélépipédique 1 est engagée et maintenue bloquée fermement dans le logement parallélépipédique formé entre la face inférieure 3c du noyau 3b du couvercle 3 et les faces latérales verticales 4b, 4c et le fond 4a de la lumière 4. Ce logement a une section droite un peu plus grande que celle du corps d'épreuve 1 et homothétique de celle-ci. L'assemblage du corps d'épreuve 1 à l'intérieur du dispositif d'ancrage est réalisé au moyen d'une couche de colle interposée entre les quatre faces latérales du corps d'épreuve parallélépipédique 1 et les quatre faces du logement de section droite rectangulaire délimité par les faces latérales 4b, 4c et le fond 4a de la lumière 4 et la face inférieure 3c du noyau 3b. Des entretoises 8, ayant une épaisseur rigoureusement constante et prédéterminée, sont disposées entre chaque face latérale du corps d'épreuve 1 et la face en regard de la lumière 4 ou la face inférieure 3c du noyau 3b. Ces entretoises 8 sont avantageusement constituées par des cordes à piano ondulées, comme on peut le voir sur la figure 4.

Le socle 2 du dispositif d'ancrage est prolongé, du côté opposé à celui où est introduit le corps d'épreuve 1, c'est-à-dire à partir de sa face frontale gauche 2c, par un cône de centrage 9 se terminant lui-même par un tenon fileté coaxial 10 dont l'awe x1, x'1 est confondu avec l'axe x, x' du socle 2 et du dispositif d'ancrage dans son ensemble.

Dans le variante d'exécution représentée sur les figures 9 à 14 le dispositif d'ancrage comporte un couvercle 3 cranté c'est-à-dire que la plaque de base supérieure 3 a du couvercle 3 est prolongée vers le bas c'est-à-dire du côté du noyau 3b, à son extrémité située du côté de la face frontale gauche 2c du socle 2, par une nervure 3d s'étendant horizontalement et transversalement et qui forme un cran venant s'engager dans une rainure correspondante 2d prévue dans la face supérieure 2a du socle 2, à l'endroit de son arête située au raccordement avec la face frontale gauche 2c.

On décrira maintenant, en se référant plus particulièrement aux figures 15 à 25, un procédé de fabrication du dispositif d'ancrage mécanique suivant l'invention.

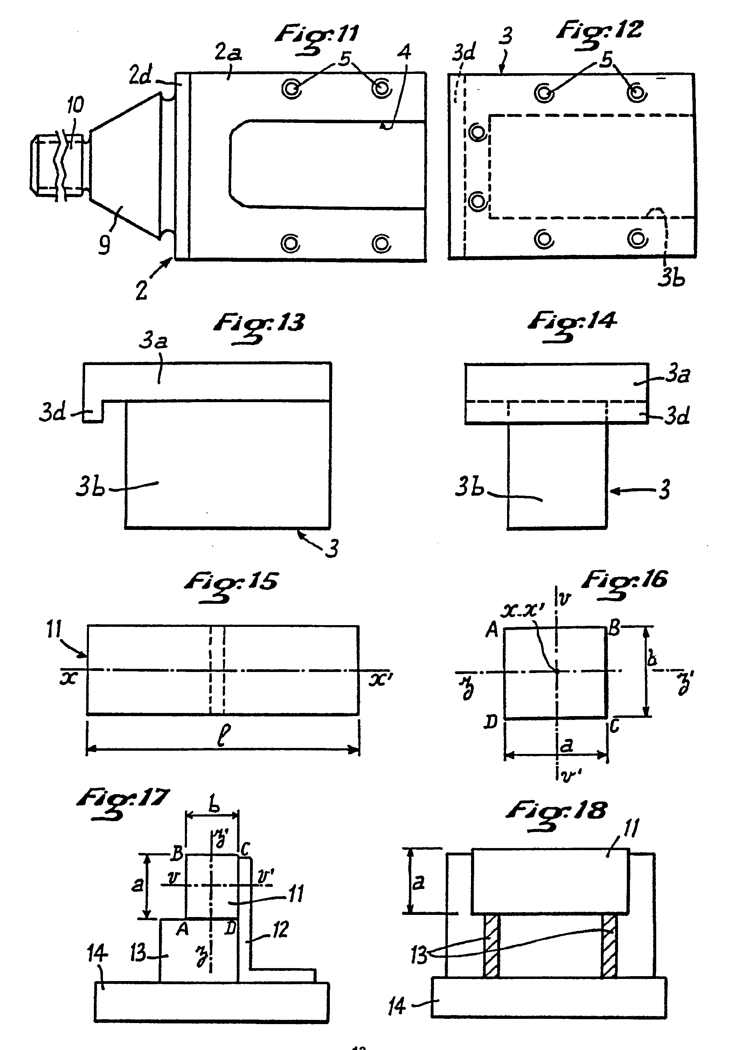

Pour obtenir les deux dispositifs d'ancrage mécanique destinés à immobiliser respectivement les deux extrémités opposées du corps d'épreuve 1, on part d'un seul et même barreau parallélépipédique 11 de longueur 1 égale au double de celle de chaque dispositif d'ancrage augmenté de la largeur de découpe 1c et de section droite rectangulaire ABCD dont les côtés ont des largeurs a et b. On rectifie tout d'abord la première face Ab en position horizontale supérieure, en plaçant le barreau 11 sur un plateau magnétique (figure 16) après quoi on tourne le barreau 11 de 90° pour amener sa face suivante BC en position supérieure horizontale. Un la maintient ainsi avec une équerre magnétique 12, comme il est représenté sur la figure 17, pendant l'opération de rectification plane de la face BC. Pendant ces opérations de rectification le barreau 1 repose sur des cales étalons 13 de hauteur appropriée, ces cales étant interposées entre le barreau 11 et la table magnétique 14 de la rectifieuse.

Dans le cas de pièces non rigides on utilise, pour la rectification de la première face AB, un étau simple ou double pour les pièces longues et on procède ensuite comme précédemment.

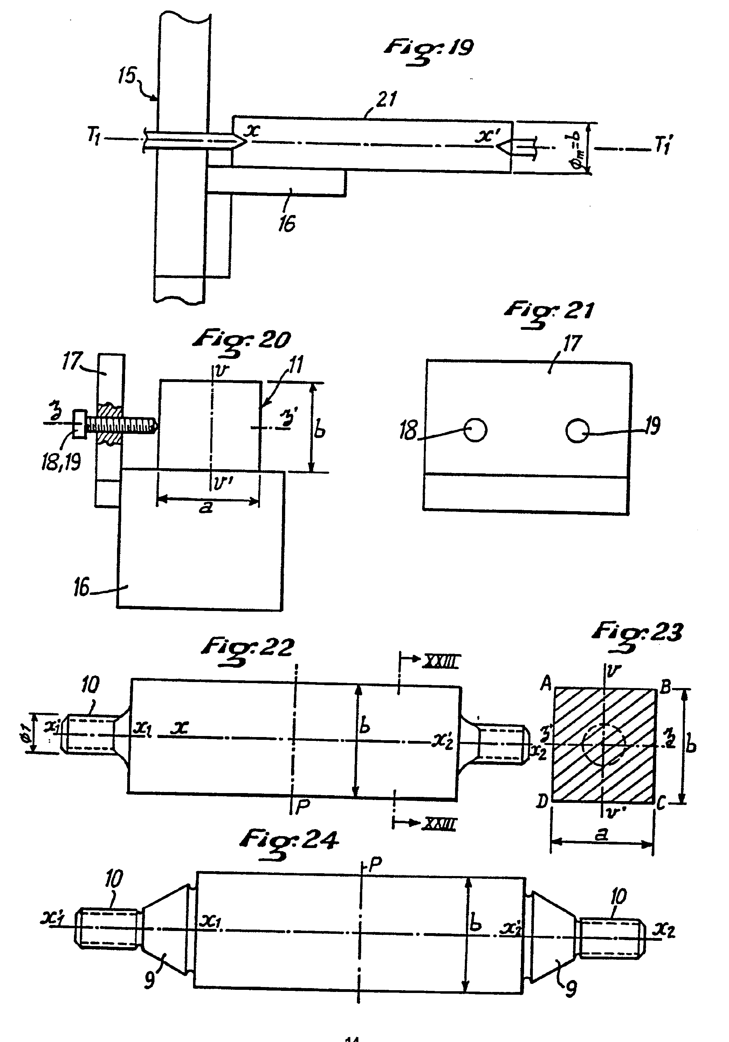

Une fois le barreau 11 rectifié sur ses quatre faces, on procède au tournage du barreau par décolletage et filetage pour obtenir, aux deux extrémités opposées du barreau 11, les deux tenons filetés coaxiaux 10. L'axe x, x' du barreau parallélépipédique 11 doit être toujours confondu avec les axes x1, x'1 et x2, x'2 des deux tenons filetés 10. Pour le tournage du barreau 11 on monte, sur le plateau 15 d'un tour (fig. 19), une équerre 16 munie d'une plaquette latérale rectifiée 17 qui est équipée de deux vis de réglage 18 et 19.

On monte ensuite, entre les deux pointes du tour, un mandrin cylindrique rectifié 21 d'un diamètre m égal ou inférieur à la plus petite des deux dimensions transversales a, b du barreau parallélépipédique 11, dans le cas présent la dimension b. Si le mandrin rectifié 21 a un diamètre inférieur à cette dimension b, on utilise alors une cale étalon d'épaisseur telle que la somme de l'épaisseur de la cale et du diamètre du mandrin soit égale à la dimension b.

On supposera que le mandrin rectifie 21 a un diamètre $\phi_m$ égal à la dimension b. On amène alors l'équerre 16 contre le mandrin 21 (figure 19) et on la bloque en position ce qui permet de fixer ainsi en position un premier axe transversal zz' du barreau 11, axe qui est perpendiculaire aux petits côtés de largeur b. On règle ensuite la position du second axe transversal vv' du barreau 11 c'est-à-dire celui qui est perpendiculaire aux grands côtés de largeur a. On utilise à cet effet une cale étalon d'épaisseur $e_2$ telle que $e_2 + d_2$ fasse coïncider l'axe T1T'1 du tour avec l'axe longitudinal xx' de la pièce. Un comparateur monté sur le trainard du tour et associé au réglage au moyen des vis 18 et 19 permet de faire coïncider les axes T1T'1 et xx'.

Une fois le barreau prismatique placé dans la position assurant la coïncidence des deux axes T1T'1 et xx', on le bride et on réalise les opérations de décolletage et filetage pour obtenir les deux tenons filetés 10 et le cas échéant les cônes de centrage 9 (figures 22 et 24). La figure 22 représente la pièce telle qu'elle se présente après tournage et filetage des deux tenons 10, sans prévision des cônes de centrage 9, ce qui donne une très bonne précision axiale. La figure 24 illustre l'obtention d'une pièce avec les deux cônes de centrage 9 dont sont issus les tenons filetés coaxiaux 10. Cette deuxième forme d'exécution assure une précision axiale absolue mais elle est plus coûteuse.

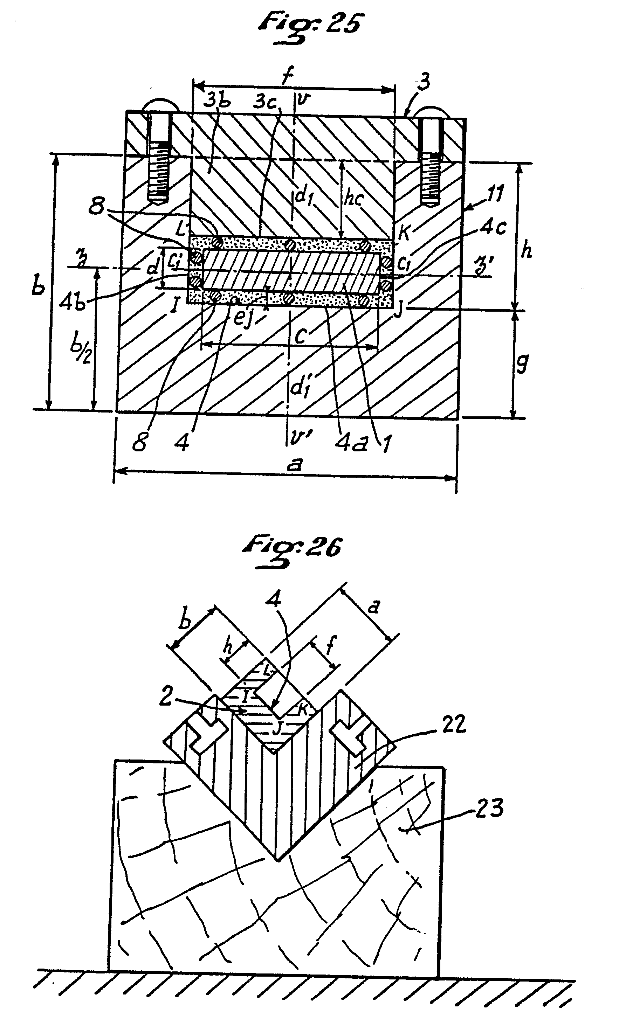

Après le décolletage et le filetage des tenons 10, on procède au fraisage d'une lumière longitudinale dans une face latérale du barreau 11 avant sa séparation en deux parties symétriques par rapport à un plan médian transversal P, pour obtenir les deux dispositifs d'ancrage assurant la fixation des deux extrémités respectives du corps d'épreuve. Cette lumière longitudinale unique doit avoir une longueur égale au double de celle de chaque lumière 4 des deux dispositifs d'ancrage fabriqués à partir du même barreau 11 augmentée de la largeur 1c de la partie sciée ou découpée transversalement. Il s'agit là d'usiner des trous qui doivent recevoir et immobiliser, dans des positions parfaitement précises, les deux partis extrêmes de section droite c × a du corps d'épreuve 1 (figure 25) qui sont logées dans la lumière 4, ces parties étant augmentées des épaisseurs $e_j$ des joints collés. Cette mise en place et cette fixation doivent se faire en assurant la coïncidence des axes de symétrie c1c'1 et d1d'1 de la section droite rectangulaire du corps d'épreuve 1 respectivement avec les axes zz' et vv' de la section droite rectangulaire du barreau parallélépipédique 11. Comme on l'a vu précédemment des entretoises 8 (cordes à piano), d'épaisseur (diamètre) $e_j$ rigoureusement constante, sont interposées entre les quatres faces latérales du corps d'épreuve 1 et les surfaces en regard du logement récepteur et elles assurent l'épaisseur du joint de colle. Si f est la largeur de la lumière fraisée 4 et h sa hauteur ou profondeur on a $h = b - g$, $g = b/2 - e_j - d/2$, $f = e + 2e_j$. On peut obtenir par fraisage une précision de l'ordre de 1/100.

On fraise ensuite le couvercle 3 de manière à dégager le noyau 3b dont la hauteur $h_c$ est définie par l'équation $h_c = b - g - g - 2e_j - d$.

Ensuite on coupe en deux, transversalement dans le plan médian P, le barreau parallélépipèdique 11, présentant la lumière longitudinale 4, et le couvercle 3, pour obtenir deux paires d'éléments constitutifs, socle 2 et couvercle 3, destinées à contituer les deux dispositifs d'ancrage mécanique prévus pour les deux parties extrêmes opposées du corps d'épreuve 1.

On réalise ensuite le collage des extrémités du corps d'épreuve 1. Un procédé préalablement à un traitement de surface adéquat des plans IJ, IL et JK c'est-à-dire des trois faces de la lumière 4, et du plan LK, c'est-à-dire de la face inférieure 3c du couvercle 3 de telle façon que la rugosité totale de chacun de ces plans soit égale au diamètre moyen des charges minérales contenues dans l'adhésif utilisé. On place, entre les quatre faces latérales du corps d'épreuve 1 et les quatre plans en regard IJ, IL, JK et LK, des entretoises en corde à piano 8 qui sont ondulées sur une largeur correspondant à la dimension c ou d du corps d'épreuve 1 et qui s'étendent sur une longueur égale à la longueur de recouvrement, leur diamètre étant égal à l'épaisseur de colle $e_j$.

Suivant une variante lorsque l'effort de traction est faible on peut remplacer l'épaisseur de colle $e_j$ par un film adhérent double face.

Pour fixation de chaque partie extrême du corps d'épreuve 1 dans un dispositif d'ancrage mécanique, on place le socle 2 de ce dispositif sur une règle en V 22 elle-même placée sur un support en bois 23 présentant une rainure en V dans sa surface supérieure. On applique de la colle sur les trois faces IJ, JK et II,

c'est-à-dire sur le fond 4a et les deux faces latérales 4b, 4c de la lumière 4 c'est-à-dire sur la face encollée IJ. On engage ensuite la partie extrême du corps d'épreuve 1 dans la lumière 4 du socle 2, après avoir préalablement encollé toutes ses faces latérales, on applique cette partie extrême du corps d'épreuve 1 sur le plan IJ de la lumière 4, après quoi on place les entretoises 8 entre les faces latérales encollées du corps d'épreuve 1 et les plans IL, KJ et finalement sur le plan LK.

Dans le cas d'une plaque très mince (valeur de d très faible) les entretoises prévues en contact avec les plans IL et KJ peuvent être supprimées, la largeur f de la lumière étant égale à la dimension transversale c de la partie extrême du corps d'épreuve. Cette partie extrême est aussi engagée glissant juste dans la lumière 4.

Ensuite on met en place le couvercle 3 et on le bloque, par vissage, de manière que le noyau 3b du couvercle 3 exerce une pression, par sa face 3c, sur le corps d'épreuve 1 qui est alors pressé à son tour contre le fond 4a de la lumière 4. Le couvercle 3 peut être éventuellement pourvu d'un cran d'arrêt en translation suivant l'axe de traction x, x', comme il est représenté sur les figures 9 à 14, dans le cas d'efforts très importants (plaques composites, clinquant d'aciers spéciaux ou en superalliage etc..)

Les figures 27, 28 et 29 illustrent le cas d'un barreau parallélépipédique 11 usiné de manière à constituer deux dispostifs d'ancrage présentant des lumières 4 de profondeurs différentes. Une telle pièce doit être fabriquée pour fixer des corps d'épreuve dont les parties extrêmes ont des épaisseurs différentes. On voit que la pièce représentée sur les figures 27 à 29 a, dans sa moitié située à gauche du plan transversal médian de séparation P, une lumière 4 ayant une profondeur $h_1$ qui est inférieure à la profondeur $h_2$ de la lumière 4 se trouvant à droite du plan médian P.

Sur la figure 30 est représenté un adaptateur qui peut être utilisé pour le montage d'un dispositif d'ancrage mécanique suivant l'invention sur une machine de traction. Cet adaptateur comporte une douille 25 qui est percée axialement de part en part. Cette douille 25 présente, dans sa partie centrale, un taraudage axial 26 dans lequel peut être vissé un tenon fileté 10 du dispositif d'ancrage. Ce taraudage 26 débouche dans un chambrage tronconique 27, évasé vers l'extérieur, qui débouche à son tour dans la face frontale inférieure de la douille 25. Ce chambrage tronconique 27 est destiné à recevoir le cone de centrage 9 du dispositif d'ancrage.

La douille 25 comporte, à sa partie supérieure sur la figure 30, une tête 28 de plus grand diamètre que le reste de son corps. Cette tête 28 est repoussée vers le bas par un ressort 30 et elle prend appui, par un épaulement transversal annulaire inférieur 29, sur la face frontale annulaire supérieure d'une bague mobile supérieure 31 d'une butée sphérique 32. Cette butée sphérique comporte par ailleurs une bague fixe inférieure 33 qui sert de portée à la bague supérieure 31. Les deux bagues 31 et 33 sont en contact l'une sur l'autre par l'intermédiaire de surfaces d'appui 34 constituées par des segments de sphères centrés en un même point sur l'axe longitudinal de l'adaptateur. La butée sphérique 32 est maintenue à l'intérieur d'une pièce en forme de cloche 35, au moyen d'un flasque annulaire 36 fixé sur la face frontale inférieure de la jupe périphérique de la pièce en forme de cloche 35, au moyen de vis longitudinales 37 vissées dans la jupe périphérique de la pièce 35. Le fond de cette pièce 35 forme de cloche est percé d'un trou dans lequel est engagée et maintenue la tête 38a d'une queue amovible 38 s'étendant axialement vers l'extérieur, à travers le fond de la pièce 35 en forme de cloche, le ressort 30 qui sollicite la douille 25 vers le bas, prenant appui sur la tête 38 a de la queue 38 à l'intérieur de la pièce 35. Cette queue amovible 38 qui peut avoir des diamètres différents et qui peut être ou non percée d'une lumière, est destinée à être serrée (ou ancrée dans le cas de lumière de perçage) entre les mors (non représentés) de la machine de traction, ainsi qu'il est indiqué par les flèches.

La douille 25 est engagée glissant juste sans jeu dans la bague supérieure mobile 31 de la butée sphérique et il en est de même pour ce qui est de la bague inférieure fixe 33 à l'intérieur de la partie inférieure de la jupe périphérique de la pièce 35 en forme de cloche. Cette adaptation doit être réalisée de manière de faire coincider d'une manière rigoureuse l'axe longitudinal de la douille 25 et l'axe longitudinal de la bague inférieure mobile 31.

Suivant une variante la douille 25 est "forcée" dans la bague supérieur mobile 31. A cet effet la douille 25 est trempée dans un liquide cryogénique tel que l'air liquide, de façon à réduire son diamètre au diamètre interne de la bague 31, après quoi la douille 25 est introduite dans la bague 31 dans laquelle elle se trouve ensuite coincée fermement par suite de sa dilatation due au réchauffement.

L'adaptateur permet ainsi, du fait de la possibilité de mouvement de la douille 25 dans toutes les directions grâce à la prévision de la butée sphérique 32, de s'aligner parfaitement avec l'axe longitudinal du corps d'épreuve 1 et celui du dispositif d'ancrage monté, au moyen d'un même adaptateur, à l'opposé sur la machine de traction.

**Revendications**

1. Dispositif d'ancrage mécanique pour le maintien d'une extrémité d'une pièce parallélépipédique, notamment d'un corps d'épreuve pendant un essai mécanique par exemple de traction ou de torsion, comprenant un socle (2) dont une première face frontale (2c) est prolongée par un tenon fileté (10) destiné à assurer la liaison avec un appareil tel qu'une machine de traction, et dont l'axe (x1, x'1) coïncide avec l'axe (x, x') du socle (2) et de la pièce (1), le socle (2) étant creusé d'une lumière parallélépipédique (4) qui débouche dans une première face latérale (2a) et dans la seconde face frontale (2b) du socle (2), et qui est usinée sur une partie de la longueur et de la largeur du socle (2) si bien que la première face latérale (2a) de ce socle (2) dans laquelle débouche la lumière (4), présente une forme en (U), un couvercle (3) fixé au socle (2), ce couvercle (3) comportant une plaque de base (3a) fixée, au moyen de vis (7), sur la première face latérale (2a) du socle (2), caractérisé en ce que le socle (2) est de forme parallélépipédique et le couvercle (3) comprend un noyau parallélépipédique (3b) prolongeant la plaque de base (3a) et s'engageant étroitement dans la lumière parallélépipédique (4), dont les faces latérales (4b, 4c) et le fond (4a) sont parallèles aux trois autres faces latérales du socle (2), sur une hauteur inférieure à la profondeur de cette lumière (4), de manière à délimiter, entre le fond (4a) de la lumière (4) et la face interne (3c) en regard du noyau (3), un logement parallélépipédique d'axe longitudinal confondu avec celui du socle (2) et du tenon fileté (10) et de section droite supérieure à celle de la pièce (1), et une couche de colle et des entretoises rigides (8) d'une même épaisseur (e) sont interposées entre chaque face latérale de la pièce (1) et la face en regard (4a, 4b, 4c, 3c) de la lumière (4) ou du noyau (3) délimitant le logement parallélépipédique, les côtés de la section droite du logement parallélépipédique ayant des longueurs respectivement supérieures à celles des côtés de la section droite de la pièce (1) en regard de deux fois la valeur de l'épaisseur (e) des entretoises (8) et de la couche de colle.

2. Dispositif suivant la revendication 1 caractérisé en ce que la plaque de base (3a) du couvercle (3) a une forme rectangulaire de même dimension que la première face latérale (2a) du socle sur laquelle elle est fixée, et elle est percée de trous (6) pour le passage des vis de fixation (7) s'engageant dans des trous taraudés (5) ménagés dans la première face latérale (2a) du socle (2) et le noyau (3b) a une longueur et une largeur inférieures à celles de la plaque de base (3a).

3. Dispositif suivant la revendication 2 caractérisé en ce que la plaque de base (3a) du couvercle est prolongée, à son extrémité située du côté de la première face frontale (2c) du socle (2) et du côté du noyau (3b), par une nervure (3d) s'étendant transversalement et formant un cran venant s'engager dans une feuillure correspondante (2d) prévue dans la première face latérale (2a) du socle (2) à l'endroit de son arête située au raccordement avec la première face frontale (2c).

4. Dispositif suivant l'une quelconque des revendications précédentes caractérisé en ce que chaque tenon fileté (10) est relié au socle (2) par un cône de centrage (9).

5. Procédé de fabrication d'un dispositif d'ancrage mécanique suivant l'une quelconque des revendications 1 à 4 caractérisé en ce qu'on part d'un seul et même barreau parallélépipédique (11) de longueur égale au double de celle du dispositif d'ancrage augmenté d'une largeur de sciage ou de découpe (1c), on rectifie les quatre faces du barreau parallélépipédique (11), on usine le barreau (11), par décolletage et filetage, pour obtenir, aux deux extrémités opposées du barreau (11), deux tenons filetés coaxiaux (10), on réalise par fraisage, dans une face latérale du barreau (11), une lumière longitudinale (4) de longueur double de celle de chaque lumière d'un dispositif d'ancrage recevant une partie extrême collée de la pièce (1), on fraise le couvercle (3) de manière à dégager son noyau (3b) de hauteur inférieure à la profondeur de la lumière fraisée dans le barreau, on coupe en deux transversalement, dans leurs plans médians (P), le barreau parallélépipédique (11) présentant la lumière longitudinale (4) et le couvercle (3) pour obtenir deux paires d'éléments constitutifs socle (2) et couvercle (3) destinées à constituer les deux dispositifs d'ancrage mécanique pour les deux parties extrêmes opposées de la pièce (1), et on colle chacune des parties extrêmes de celle-ci dans le logement délimité, dans la lumière (4), par le noyau (3b) du couvercle (3), avec interposition des entretoises (8) entre les faces latérales de la pièce (1) et les faces en regard du logement.

6. Procédé suivant la revendication 5 caractérisé en ce que pour le collage de chaque partie extrême de la pièce (1) à l'intérieur du dispositif d'ancrage mécanique on applique de la colle sur le fond (4a) et les deux faces latérales (4b, 4c) de la lumière (4), on place des entretoises (8) dans le fond encollé (4a) la lumière (4), on engage ensuite la partie extrême de la pièce (1) dans la lumière (14) et on l'applique sur le fond encollé (4a) de cette lumière (4) après avoir encollé préalablement toutes les faces latérales de cette pièce (1), on place ensuite des entretoises (8) entre les faces latérales encollées du corps d'épreuve et les faces latérales encollées (4b, 4c) de la lumière (4), on applique ensuite des entretoises (b) sur la face latérale encollée, qui reste exposée, de la pièce (1), on met en place le couvercle (3) et on le bloque par vissage de manière que le noyau (3b) du couvercle (3) exerce une pression, par sa face (3c), sur la pièce (1) qui est alors pressée à son tour contre le fond (4a) de la lumière (4).

7. Procédé suivant l'une quelconque des revendications 5 et 6 caractérisé en ce qu'on place, entre toutes les faces latérales du corps d'épreuve (1) ou certaines de celles-ci et les plans en regard (IJ, IL, JK, LK), des entretoises en corde à piano (8) qui sont ondulées sur une largeur correspondant à la dimension (c) ou (d) du corps d'épreuve (1) et qui s'étendent sur une longueur égale à la longueur de recouvrement, leur diamètre étant égal à l'épaisseur de colle (e$_j$).

8. Procédé suivant l'une quelconque des revendications 5 à 7 caractérisé en ce qu'on usine, dans le barreau parallélépipédique (11), une lumière longitudinale (4) ayant des profondeurs différentes de deux côtés du plan transversal médian de séparation (P), pour la fixation de pièces dont les parties extrêmes ont des épaisseurs différentes.

9. Adaptateur pour le montage, sur une machine suivant l'une quelconque des revendications 1 à 4 caractérisé en ce qu'il comprend une douille (25) présentant un alésage taraudé axial (26) dans lequel est vissé le tenon fileté (10) du dispositif d'ancrage mécanique (2, 3), cet alésage taraudé (26) débouchant dans une face frontale du manchon (25) par un chambrage conique (27) évasé vers l'extérieur et recevant un cône de centrage (9) de même angle prévu sur le dispositif d'ancrage entre son tenon fileté (10) et son socle (2), cette douille (25) comportant, à son extrémité opposée au chambrage conique (27), une tête de plus grand diamètre (28) appliquée contre une butée sphérique (32) montée à l'intérieur d'un support en forme de cloche (35) qui est relié, par l'intermédiaire d'une queue axiale amovible (3b) traversant le fond du support en forme de cloche (35), aux mors de la machine de traction.

**Ansprüche**

1. Mechanische Verankerungsvorrichtung zur Halterung eines Endes eines parallelepipedförmigen Stückes, insbesondere eines Proben-Körpers während einer mechanischen Prüfung, insbesondere einer Zug- oder Torsionsprüfung, mit einem Sockel (2) bei dem eine erste Stirnfläche (2c) durch einen Gewindezapfen (10) verlängert ist, der zur Verbindung mit einer Apparatur, wie einer Zerreißmaschine, bestimmt ist und dessen Achse (x1, x'1) mit der Achse (x, x') des Sockels (2) und des Stückes (1) zusammenfällt, wobei der Sockel (2) durch einen parallelepipedförmigen Hohlraum (4) ausgehöhlt ist, der in einer ersten Seitenfläche (2a) und in der zweiten Stirnfläche (2b) des Sockels (2) mündet und der auf einem Teil der Länge und der Breite des Sockels (2) so bearbeitet ist, daß die erste Seitenfläche (2a) des Sockels (2), in der der Hohlraum (4) mündet, die Form eines U hat, und einem Deckel (3) der am Sockel (2) befestigt ist und eine Grundplatte (3) aufweist, die durch Schrauben (7) an der ersten Seitenfläche (2a) des Sockels (2) befestigt ist, **dadurch gekennzeichnet, daß** der Sockel (2) eine parallelepipedförmige Form hat und daß der Deckel (3) einen parallelepipedförmigen Kern (3b) aufweist, der die Grundplatte (3a) verlängert und eng in den parallelepipedförmigen Hohlraum (4), dessen Seitenflächen (4b, 4c) und Boden (4a) parallel zu drei anderen Seitenflächen des Sockels (2) sind, bis zu einer Tiefe hineinreicht, die kleiner ist als die Tiefe des Hohlraums (4), so daß zwischen dem Boden (4a) des Hohlraums (4) und der gegenüberliegenden Innenfläche (3c) des Kerns (3) ein parallelepipedförmiger Sitz gebildet wird, dessen Längsachse mit der des Sockels (2) sowie der des Gewindezapfens (10) zusammenfällt und dessen Querschnitt größer ist als der des erwähnten Stückes (1), und daß eine Kleberschicht und starre Stege (8) gleicher Dicke (e) zwischen jeder Seitenfläche des genannten Stückes (1) und der gegenüberliegenden Fläche (4a, 4b, 4c, 3c) des Hohlraums (4) oder des Kerns (3), die den parallelepipedförmigen Sitz begrenzen, eingefügt sind, und daß die Seiten des Querschnitts des parallelepipedförmigen Sitzes Längen haben, welche um das zweifache des Wertes der Dicke (e) der Stege (8) und der Kleberschicht größer sind als die der gegenüberliegenden Seiten des Querschnitts des genannten Stückes (1).

2. Einrichtung nach Anspruch 1, **dadurch gekennzeichnet, daß** die Grundplatte (3a) des Deckels (3) eine rechteckige Form gleicher Größe wie die erste Seitenfläche (2a) des Sockels, auf der sie befestigt ist, hat und daß sie von Löchern (6) für Befestigungsschrauben (7) durchsetzt ist, welche in Gewindelöcher (5) eingreifen, die in der ersten Seitenfläche (2a) des Sockels (2) gebildet sind, und daß der Kern (3b) eine kleinere Länge und Breite als die Grundplatte (3a) hat.

3. Einrichtung nach Anspruch 2, **dadurch gekennzeichnet, daß** die Grundplatte (3a) des Deckels an ihrem Ende, das sich auf der Seite der ersten Stirnfläche (2c) des Sockels (2) und auf der Seite des Kerns (3b) befindet, durch eine Rippe (3d) verlängert ist, die quer verläuft und einen Zahn bildet, der in einen entsprechenden Falz (2d) eingreift, welcher in der ersten Seitenfläche (2a) des Sockels (2) bei deren Kante an ihrer Verbindung mit der ersten Stirnfläche (2c) vorgesehen ist.

4. Einrichtung nach einem der vorhergehenden Ansprüche, **dadurch gekennzeichnet, daß** jeder Gewindezapfen (10) mit dem Sockel (2) durch einen Zentrierkonus (9) verbunden ist.

5. Verfahren zum Herstellen einer mechanischen Verankeiungsvorrichtung nach einem der Ansprüche 1 bis 4, **dadurch gekennzeichnet, daß** man von einem einzigen parallelepipedförmigen Stab (11) mit einer Länge gleich dem Doppelten der Verankerungsvorrichtung zuzüglich einer Schnitt- oder Sägebreite (1c) ausgeht, die vier Flächen des parallelepipedförmigen Stabes (11) schleift, den Stab (11) durch Drehen und Schneiden eines Außengewindes bearbeitet, um an den beiden entgegengesetzten Enden des Stabes (11) zwei koaxiale Gewindezapfen (10) zu erhalten, man durch Fräsen in einer Seitenfläche des Stabes (11) einen longitudinalen Hohlraum (4) bildet, dessen Länge das Doppelte jedes Hohlraums einer Halterungsvorrichtung ist, welcher ein geklebtes Ende des genannten Stückes aufnimmt, der Deckel (3) derart gefräst wird, daß sein Kern (3b) mit einer Höhe freigelegt ist, die kleiner ist als die Tiefe des in den Stab gefrästen Hohlraumes, der parallelepipedförmige Stab (11) mit dem longitudinalen Hohlraum (4) und dem Deckel (3) in der Mittelebene (P) in zwei Teile zerschnitten wird, um zwei Paare von Elementen aus einem Sockel (2) und einem Deckel (3) zu erhalten, welche dazu bestimmt sind, die zwei mechanischen Verankerungsvorrichtungen für die zwei entgegengesetzten Enden des genannten Stückes (1) zu bilden und daß man dessen beide Enden jeweils in den Sitz klebt, der im Hohlraum (4) durch den Kern (3b) des Deckels (3) begrenzt ist, unter Zwischenlage der Stege (8) zwischen die Seitenflächen des Stückes (1) und die gegenüberliegenden Flächen des Sitzes.

6. Verfahren nach Anspruch 5, **dadurch gekennzeichnet**, daß zum Kleben der jeweiligen Enden des Stückes (1) in das Innere der Verankerungsvorrichtung Klebstoff auf den Boden (4a) und die beiden Seitenflächen (4b, 4c) des Hohlraumes (4) aufgebracht wird, daß man die Stege (8) auf den kleberbeschichteten Boden (4a) des Hohlraums (4) legt, daß man dann das Ende des Stückes (1) in den Hohlraum (4) einsetzt und am kleberbeschichteten Boden (4a) des Hohlraums (4) anbringt, nachdem vorher alle Seitenflächen des Stückes (1) mit Kleber versehen wurden, daß man dann die Stege (8) zwischen die mit Kleber versehenen Seitenflächen des Probekörpers die mit Kleber versehenen Seitenflächen (4b, 4c) des Hohlraums (4) einbringt, daß man dann die Stege (8) auf die mit Kleber versehene, frei gebliebene Seitenfläche des Stückes (1) aufbringt, daß man den Deckel (3) anbringt und so festschraubt, daß der Kern (3b) des Deckels (3) mit seiner Vorderseite (3c) einen Druck auf das Stück (1) ausübt, welches dadurch seinerseits gegen den Boden (4a) des Hohlraumes (4) gedrückt wird.

7. Verfahren nach einem der Ansprüche 5 oder 6, **dadurch gekennzeichnet**, daß man zwischen alle Seitenflächen des Probekörpers (1) oder gewisse dieser Flächen und die gegenüberliegenden Ebenen (IJ, IL, JK, LK) Stege aus Klavierdraht (8) anordnet, die über eine Breite gewellt sind, welche der Abmessung (c) oder (d) des Probekörpers (1) entsprechen, und die sich über eine Länge erstrecken, die gleich der Länge der Überdeckung entsprechen und deren Durchmesser gleich der Dicke des Klebers ($e_i$) ist.

8. Verfahren nach einem der Ansprüche 5 bis 7, **dadurch gekennzeichnet**, daß man in den parallelepipedförmigen Stab (11) einen longitudinalen Hohlraum (4) einarbeitet, der auf den beiden Seiten der transversalen mittleren Trennebene (P) unterschiedliche Tiefen hat um Stücke zu halten, deren Enden unterschiedliche Dicken aufweisen.

9. Anpassungsvorrichtung zum Anbringen einer Verankerungsvorrichtung nach einem der Ansprüche 1 bis 4 an einer Zerreißmaschine, **dadurch gekennzeichnet**, daß sie eine Hülse (25) aufweist, welche eine axiale Gewindebohrung (26) hat, in die der Gewindezapfen (10) der mechanischen Verankerungsvorrichtung (2, 3) eingeschraubt ist, daß die Gewindebohrung (26) in einer Stirnfläche der Buchse (25) über eine konische Ansenkung (27) mündet, welche sich nach außen erweitert und einen Zentrierkonus (9) mit demselben Winkel aufnimmt, wie er bei der Verankerungsvorrichtung zwischen deren Gewindezapfen (10) und dem Sockel (2) vorgesehen ist, daß die Hülse (25) an ihrem Ende, das der konischen Ansenkung (27) entgegengesetzt ist, einen Kopf (28) vergrößerten Durchmessers aufweist, der an einem sphärischen Anschlag (32) anliegt, welcher im Inneren eines glockenförmigen Trägers (35) befestigt ist, der über einen lösbaren axialen Schaft (3b), der den Boden des glockenförmigen Trägers (35) durchsetzt, mit den Backen der Zerreißmaschine verbunden ist.

## Claims

1. Mechanical anchoring device for holding an end of a parallelepipedic workpiece, particularly a test body during a mechanical test for example of traction or of torsion, comprising a base 2 of which a first frontal face 2c is extended by a threaded tenon 10 adapted to ensure connection with an apparatus such as a traction machine, and of which the axis x1, x'1 merges with the axis x, x' of the base 2 and of the workpiece 1, the base 2 having hollowed out therein a parallelepipedic slot 4 which opens out in a first lateral face 2a and in the second frontal face 2b of the base 2, and which is machined over a part of the length and width of the base 2, so that the first lateral face 2a of this base 2 in which the slot 4 opens out, presents a U-shape, a cover 3 fixed to the base 2, this cover 3 comprising a base plate 3a fixed, by means of screws 7, on the first lateral face 2a of the base 2, characterized in that the base 2 is parallelepipedic in shape and the cover 3 comprises a parallelepipedic core 3b extending the base plate 3a and engaging closely in the parallelepipedic slot 4, of which the lateral faces 4b, 4c and the bottom 4a are parallel to the other three lateral faces of the base 2, over a height shorter than the depth of this slot 4, so as to define, between the bottom 4a of the slot 4 and the opposite inner face 3c of the core 3, a parallelepipedic housing whose longitudinal axis merges with that of the base 2 and of the threaded tenon 10 and of cross section greater than that of the workpiece 1, and a layer of glue and rigid spacer members 8 of the same thickness (e) are interposed between each lateral face of the workpiece 1 and the opposite face 4a, 4b, 4c, 3c of the slot 4 or of the core 3 defining the parallelepipedic housing, the sides of the cross section of the parallelepipedic housing having lengths respectively greater than those of the sides of the cross section of the opposite workpiece 1 by twice the value of the thickness of the spacer members 8 and the layer of glue.

2. Device according to Claim 1, characterized in that the base plate 3a of the cover 3 has a rectangular shape of the same dimensions as the first lateral face 2a of the base on which it is fixed, and it is pierced with holes 6 for the passage of the fixing screws 7 engaging in tapped holes 5 made in the first lateral face 2a of the base 2 and the core 3b has a length and width smaller than those of the base plate 3a.

3. Device according to Claim 2, characterized in that the base plate 3a of the cover is extended, at its end located towards the first front face 2c of the base 2 and towards the core 3b, by a rib 3d extending transversely and forming a notch engaging in a corresponding rabbet 2d provided in the first lateral face 2a of the base 2 at the location of its edge lying at the join with the first front face 2c.

4. Device according to any one of the preceding Claims, characterized in that each threaded tenon 10 is connected to the base 2 by a centering cone 9.

5. Process for manufacturing a mechanical anchoring device according to any one of Claims 1 to 4, characterized in that one starts with one and the same parallelepipedic bar 11 of length equal to double that of the anchoring device increased by a width of sawing or cut-out (1c) ; the four faces of the parallelepipedic bar 11 are precision-finished ; the bar 11 is machined, by cut-off and threading, in order to obtain, at the two opposite ends of the bar 11, two coaxial threaded tenons 10 ; there is milled in a lateral face of the bar 11 a longitudinal slot 4 of length double that of each slot of an anchoring device receiving a glued end part of the workpiece 1 ; the cover 3 is milled so as to disengage its core 3b of height less than the depth of the slot milled in the bar ; the parallelepipedic bar 11 presenting the longitudinal slot 4 and the cover 3 are cut into two transversely, in their median planes P, in order to obtain two pairs of elements constituting base 2 and cover 3 intended to constitute the two mechanical anchoring devices for the two opposite end parts of the workpiece 1 ; and each of the end parts of the latter is glued in the housing defined, in the slot 4, by the core 3b of the cover 3, with the interposition of the spacer members 6 between the lateral faces of the workpiece 1 and the opposite faces of the housing.

6. Process according to Claim 5, characterized in that, for gluing each end part of the workpiece 1 inside the mechanical anchoring device, glue is applied on the bottom 4a and the two lateral faces 4b, 4c of the slot 4 ; spacer members 8 are placed in the glued bottom 4a (of) the slot 4 ; the end part of the workpiece 1 is then engaged in the slot 14 and is applied on the glued bottom 4a of this slot 4 after having previously glued all the lateral faces of this workpiece 1 ; spacer members 6 are then placed between the glued lateral faces of the test body and the glued lateral faces 4b, 4c of the slot 4 ; cross pieces 6 are then applied on the glued lateral face, which remains exposed, of the workpiece 1, the cover 3 is placed in position and blocked by screwing so that the core 3b of the cover 3 exerts a pressure, by its face 3c, on the workpiece 1 which, in turn, is then pressed against the bottom 4a of the slot 4.

7. Process according to either one of Claims 5 and 6, characterized in that piano chord spacer members 8 are placed between all the lateral faces of the test body 1 or certain of them and the opposite planes IJ, IL, JK, LK, which (spacer members) are undulated over a width corresponding to the dimension (c) or (d) of the test body 1 and which extend over a length equal to the length of overlap, their diameter being equal to the thickness of glue (ej).

8. Process according to any one of Claims 5 to 7, characterized in that a longitudinal slot 4 is machined in the parallelepipedic bar 11, having different depths on the two sides of the median transverse plane of separation P, for fixing workpieces whose end parts have different thicknesses.

9. Adapter for assembling on a traction machine a mechanical anchoring device according to any one of Claims 1 to 4, characterized in that it comprises a bush 25 presenting an axial tapped bore 26 in which is screwed the threaded tenon 10 of the mechanical anchoring device 2, 3, this tapped bore 26 opening in a front face of the sleeve 25 via an outwardly flared conical chamber 27 receiving a centering cone 9 of the same angle provided on the anchoring device between its threaded tenon 10 and its base 2, this bush 25 comprising, at its end opposite the conical chamber 27, a head 26 of larger diameter applied against a spherical stop 32 mounted inside a bell-shaped support 35 which is connected, via a removable axial tail 36 passing through the bottom of the bell-shaped support 35, to the jaws of the traction machine.

Fig. 1

Fig. 2

Fig. 3

Fig. 4

Fig. 5

*Fig. 6*

*Fig. 7*

*Fig. 8*

*Fig. 9*

*Fig. 10*

Fig:11

Fig:12

Fig:13

Fig:14

Fig:15

Fig:16

Fig:17

Fig:18

*Fig. 19*

*Fig. 20*

*Fig. 21*

*Fig. 22*

*Fig. 23*

*Fig. 24*

## Fig. 25

## Fig. 26

Fig. 27

Fig. 29

Fig. 30

Fig. 28

16